# FASCICULE DE BREVET EUROPEEN

(11) **EP 2 473 731 B1**
(45) Date de publication et mention de la délivrance du brevet: **07.08.2013**
(21) Numéro de dépôt: 10763773.8
(22) Date de dépôt: 30.08.2010
(51) Int. Cl.: F03B 17/00, F03D 9/02

(54) **MINI CENTRALE HYDROELECTRIQUE**
HYDROELEKTRISCHES MINIKRAFTWERK
MINIATURE HYDROELECTRIC POWER PLANT

(30) Priorité: 01.09.2009 FR 0955942
(43) Date de publication de la demande: 11.07.2012
(73) Titulaire: Crugnale, Ivano, 54202 Toul Cedex (FR)
(72) Inventeur: Crugnale, Ivano, 54202 Toul Cedex (FR)
(74) Mandataire: Poupon, Michel
(86) Numéro de dépôt international: PCT/FR2010/051799
(87) Numéro de publication internationale: WO 2011/027069

(56) Documents cités:
- EP-A1- 1 312 800
- GB-A- 348 603
- GB-A- 2 454 255
- US-A- 4 443 707
- US-A- 5 755 553
- US-A- 6 051 892
- US-B1- 6 420 794

## Description

L'invention concerne le domaine de la production énergétique, plus particulièrement celui de l'électricité.

Il est connu depuis de nombreuses années d'employer des sources énergétiques renouvelables et non polluantes, qui ne génèrent pas de CO₂, ces sources énergétiques sont par exemple l'énergie solaire, l'énergie éolienne, l'énergie récupérée des vagues, des courants marins ou de la marée.

Les énergies favorables à l'environnement présentent un défaut commun avec les centrales au fuel ou au charbon utilisées pour générer de l'électricité qui est la difficulté, voire l'impossibilité, de stockage pour une utilisation au plus près de la demande.

Par ailleurs il est à noter que les énergies renouvelables et non polluantes comme l'énergie photovoltaïque et l'éolien se développent rapidement dans les installations domestiques et qu'il est déjà possible de réaliser des petites centrales susceptibles d'alimenter en électricité un quartier ou des petits établissements industriels.

Ce développement de petite centrale est toutefois freiné par le problème du stockage et de la disponibilité énergétique en fonction de la consommation du moment.

Pour tenter de résoudre ce problème il est prévu que les installations qui génèrent de l'énergie soient raccordées au réseau électrique général et que l'électricité produite non utilisée localement soit revendue, par ailleurs lorsque la production domestique est insuffisante l'utilisateur utilise l'électricité du réseau et se trouve donc facturé en conséquence.

Cette solution apparait peu satisfaisante pour de nombreux utilisateurs qui souhaitent une indépendance énergétique complète et en raison du montant payé par le distributeur d'électricité local qui ne peut pas être discuté par les particuliers.

Le problème du développement des énergies renouvelables au niveau domestique et des collectivités locales est donc forcément relié à celui du stockage de l'énergie produite.

L'invention a donc pour objectif de résoudre cette principale difficulté en proposant une mini centrale hydroélectrique associée à un ensemble quelconque de production d'énergie renouvelable de manière à stocker de l'énergie et à la rendre disponible en fonction des besoins des utilisateurs.

US 6420794 B est considéré comme l'etat de la technique le plus proche de la revendication 1.

La présente invention concerne une mini centrale hydroélectrique comprenant un réservoir de stockage et une conduite forcée pour l'écoulement de l'eau vers un bac de récupération, une turbine reliée à une génératrice d'électricité étant placée dans la conduite, l'eau d'alimentation du réservoir de stockage étant amenée depuis le bac de récupération par un moyen d'alimentation activé par un moyen moteur actionné par une source énergétique autonome et écologique. Selon l'invention, le moyen d'alimentation est une roue munie de récipients, laquelle roue est solidaire d'un dispositif d'entraînement en prise avec la moyen moteur, , et le dispositif d'entraînement est une roue dentée de grand diamètre coaxiale avec la roue munie de récipients.

La mini centrale selon l'invention présente l'avantage de permettre le stockage de l'énergie et son utilisation à la demande, toutefois le dispositif peut également être utilisé pour de l'irrigation avec un couplage à de la production énergétique.

Un autre avantage du dispositif est qu'il fait appel à des technologies éprouvées, donc très fiables, dont les coûts d'investissement peuvent être assez rapidement amortis.

D'autres caractéristiques et avantages de l'invention se dégageront de la description qui va suivre en regard des dessins annexés qui ne sont donnés qu'à titre d'exemples non limitatifs.
La figure 1 est un synoptique de fonctionnement de la mini centrale.
La figure 2 est une vue de détail du dispositif d'élévation d'eau.

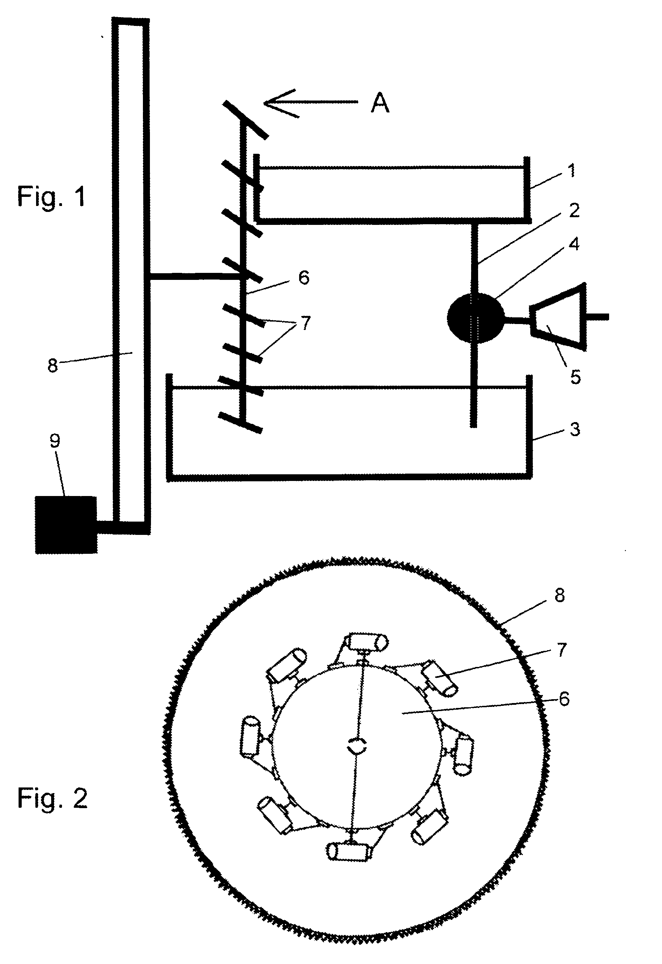

Ainsi que cela est représenté sur la figure 1 la mini centrale hydroélectrique comporte un réservoir de stockage 1 et une conduite forcée 2 pour l'écoulement de l'eau vers un bac de récupération 3, une turbine 4 reliée à une génératrice d'électricité 5 étant placée dans la conduite.

L'eau d'alimentation du réservoir de stockage 1 est amenée depuis le bac de récupération 3 au moyen d'un moyen d'alimentation activé par un moyen moteur 9 actionné par une source énergétique autonome et écologique.

Selon l'invention, le moyen d'alimentation est du type dispositif d'élévation d'eau comportant une roue 6 munie de récipients 7, laquelle roue est solidaire d'un dispositif d'entraînement 8 relié mécaniquement au moyen moteur 9 pour actionner l'ensemble en rotation. Le dispositif d'entraînement 8 est une roue dentée de grand diamètre coaxiale avec la roue 6 munie de récipients 7.

Par source énergétique autonome il doit être compris un ensemble producteur d'énergie permettant d'actionner la roue 6 en rotation au travers du dispositif d'entraînement 8. Une éolienne peut par exemple être couplée au travers d'une transmission pour transformer l'énergie du vent directement en un mouvement de rotation utilisable pour faire monter l'eau. Selon une autre variante un ensemble de cellule photovoltaïque peut par exemple alimenter un moteur électrique classique.

Par source énergétique écologique il doit être compris une source d'énergie ne générant pas pour sa production du CO₂, notamment ce qu'il est convenu d'appeler une énergie renouvelable, provenant du soleil ou du vent, par exemple.

Ainsi selon une première variante de l'invention la source énergétique correspond à des panneaux photovoltaïques. Selon une deuxième variante de l'invention la source énergétique est formée par un ensemble éolien. Selon une troisième variante, la source énergétique correspond à des panneaux photovoltaïques couplés à un ensemble éolien. Cette dernière variante permet un fonctionnement de la centrale nuit et jour.

Le moyen moteur 9 a pour effet de faire tourner le moyen d'entraînement 8 solidaire de la roue 6 qui porte les récipients 7.

La figure 2 montre selon la direction d'observation A représentée sur la figure 1 l'ensemble du dispositif d'entraînement 8 et de la roue 6 porteuse des récipients 7.

Le dispositif d'entraînement 8 est formé par une roue dentée de grand diamètre en prise avec le moyen moteur 9, la roue 6 supporte plusieurs récipients destinés à collecter l'eau dans le bac de récupération 3 pour l'amener dans le réservoir de stockage 1. Cette roue est donc partiellement immergée dans ledit bac de récupération.

Ainsi selon l'invention le dispositif d'entraînement est une roue dentée de grand diamètre coaxiale avec la roue munie de récipients. Plus le diamètre de la roue dentée est grand, plus le volume d'eau transportée est important et moins élevée sera la dépense énergétique de l'installation. Ceci à l'inverse d'une pompe pour laquelle plus on augmente sa capacité, plus importante est la dépense énergétique de l'installation.

Avantageusement le réservoir de stockage 1 est muni d'une électrovanne de manière à interrompre l'écoulement d'eau, ce qui permet de n'utiliser la mini centrale qu'en cas de besoin.

Avantageusement encore le réservoir de stockage 1 comporte en outre une vanne pour l'envoi de l'eau en direction d'un système d'irrigation.

Selon cette variante le dispositif est utilisable pour déplacer l'eau depuis un point bas vers un point haut en utilisant une source énergétique autonome et écologique.

Selon l'invention l'alimentation du système d'irrigation peut se faire simultanément à la production d'électricité, lorsque les deux vannes sont ouvertes.

Selon une autre configuration l'alimentation du système d'irrigation se fait en alternance avec la production d'électricité, en fonction des besoins en électricité ou en eau pour l'irrigation.

Bien évidemment les vannes qui orientent l'eau vers l'irrigation ou vers la conduite forcée 2 peuvent être asservies par un gestionnaire de fonctionnement de l'installation ou/et fonctionner manuellement.

Avantageusement le fonctionnement de la mini centrale hydraulique est relié à la gestion de fonctionnement du moyen moteur et donc à la source énergétique autonome et écologique. De manière optimale la source énergétique autonome et écologique produit de l'électricité et actionne le fonctionnement de la mini centrale dans les périodes de sous consommation de manière à stocker l'énergie.

Selon un exemple avantageux de réalisation de l'invention, la mini centrale hydroélectrique possède les caractéristiques suivantes :
- Le moyen moteur 9 est une éolienne,
- le dispositif d'entraînement 8 est une roue dentée de 28 mètres de diamètre,
- la roue 6 mesure 10 mètres de diamètre et porte 16 récipients,
- chaque récipient de forme cylindrique est capable d'emporter 3.6 m³,
- le réservoir de stockage a une capacité de environ 200 m³,
- la chute d'eau de 6 m³ d'eau par seconde dans la conduite forcée permet de générer une production d'électricité de 240 KWh.

Plusieurs variantes de la mini centrale hydroélectrique sont possibles, le moyen moteur peut notamment être défini dans une gamme de techniques selon les éléments particuliers du site d'installation, selon l'ensoleillement ou la présence de vents importants et selon différents critères locaux permettant une optimisation du système, sans sortir du cadre de l'invention.

Le dimensionnement de chaque partie de l'installation qui permet le stockage de l'eau, et donc de l'énergie, peut varier dans une large plage, sans sortir du cadre de l'invention.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Mini centrale hydroélectrique comprenant un réservoir de stockage (1) et une conduite forcée (2) pour l'écoulement de l'eau vers un bac de récupération (3), une turbine (4) reliée à une génératrice d'électricité (5) étant placée dans la conduite (2), l'eau d'alimentation du réservoir de stockage (1) étant amenée depuis le bac de récupération (3) par un moyen d'alimentation (6) activé par un moyen moteur (9) actionné par une source énergétique autonome et écologique, **caractérisé en ce que** le moyen d'alimentation est une roue (6) munie de récipients (7), laquelle roue (6) est solidaire d'un dispositif d'entraînement (8) en prise avec un moyen moteur (9), le dispositif d'entraînement (8) étant une une roue dentée de grand diamètre coaxiale avec la roue (6) munie de récipients (7).

2. Mini centrale hydroélectrique selon la revendication 1 dans laquelle la source énergétique comprend au moins des panneaux photovoltaïques.

3. Mini centrale hydroélectrique selon la revendication 1 dans laquelle la source énergétique comprend au moins un ensemble éolien.

4. Mini centrale hydroélectrique selon la revendication 1 dans laquelle le réservoir de stockage (1) est muni d'une électrovanne de manière à interrompre l'écoulement d'eau.

5. Mini centrale hydroélectrique selon la revendication 1 dans laquelle le réservoir de stockage (1) comporte en outre une vanne pour l'envoi de l'eau en direction d'un système d'irrigation.

6. Mini centrale hydroélectrique selon la revendication 6 dans laquelle l'alimentation du système d'irrigation se fait simultanément à la production d'électricité.

7. Mini centrale hydroélectrique selon la revendication 6 dans laquelle l'alimentation du système d'irrigation se fait en alternance avec la production d'électricité, en fonction des besoins en électricité ou en eau pour l'irrigation.

## Patentansprüche

1. Hydroelektrisches Minikraftwerk, das einen Lagertank (1) und eine Druckleitung (2) für die Strömung des Wassers zu einem Auffangbecken (3) und eine mit einem Stromgenerator (5) verbundene Turbine (4) aufweist, die in der Leitung (2) angeordnet ist, wobei das Speisewasser des Lagertanks (1) von einem Speisungsmittel (6) aus dem Auffangbehälter (3) zugeführt wird, welches von einem Motormittel (9) aktiviert wird, das von einer autonomen und umweltfreundlichen Energiequelle betätigt wird, **dadurch gekennzeichnet, dass** das Speisungsmittel ein mit Behältern (7) ausgestattetes Rad (6) ist, wobei das Rad (6) fest mit einer im Eingriff mit dem Motormittel (9) stehenden Antriebsvorrichtung (8) verbunden ist, wobei die Antriebsvorrichtung (8) ein Zahnrad mit großem Durchmesser ist, das mit dem mit Behältern (7) ausgestatteten Rad (6) koaxial ist.

2. Hydroelektrisches Minikraftwerk nach Anspruch 1, wobei die Energiequelle mindestens Solarpanele aufweist.

3. Hydroelektrisches Minikraftwerk nach Anspruch 1, wobei die Energiequelle mindestens eine Windenergieeinheit aufweist.

4. Hydroelektrisches Minikraftwerk nach Anspruch 1, wobei der Lagertank (1) mit einem Magnetventil ausgestattet ist, um die Wasserströmung zu unterbrechen.

5. Hydroelektrisches Minikraftwerk nach Anspruch 1, wobei der Lagertank (1) außerdem ein Ventil für den Transport des Wassers in die Richtung eines Bewässerungssystems aufweist.

6. Hydroelektrisches Minikraftwerk nach Anspruch 5, wobei die Speisung des Bewässerungssystems gleichzeitig mit der Erzeugung elektrischer Energie durchgeführt wird.

7. Hydroelektrisches Minikraftwerk nach Anspruch 6, wobei die Speisung des Bewässerungssystems abwechselnd mit der Erzeugung elektrischer Energie in Abhängigkeit von dem Bedarf an elektrischer Energie oder dem Bedarf an Wasser zur Bewässerung durchgeführt wird.

## Claims

1. Miniature hydroelectric power station comprising a storage reservoir (1) and a forced pipe (2) for the flow of water to a recovery tank (3), a turbine (4) connected to an electricity generator (5) being placed in the pipe (2), the water feeding the storage reservoir (1) being supplied from the recovery tank (3) by supply means (6) activated by drive means (9) actuated by an autonomous and ecological energy source, **characterized in that** the supply means comprise a wheel (6) provided with containers (7), which wheel (6) is rigidly fastened to a drive system (8) interengaged with drive means (9), the drive system (8) being a toothed wheel of large diameter coaxial with the wheel (6) provided with containers (7).

2. Miniature hydroelectric power station according to claim 1 wherein the energy source comprises at least photovoltaic panels.

3. Miniature hydroelectric power station according to claim 1 wherein the energy source comprises at least a wind turbine system.

4. Miniature hydroelectric power station according to claim 1 wherein the storage reservoir (1) is provided with a solenoid valve for interrupting the flow of water.

5. Miniature hydroelectric power station according to claim 1 wherein the storage reservoir (1) further includes a valve for directing water to an irrigation system.

6. Miniature hydroelectric power station according to claim 6 wherein the irrigation system is fed simultaneously with the production of electricity.

7. Miniature hydroelectric power station according to claim 6 wherein the irrigation system is fed alternately with the production of electricity, as a function of the requirements for electricity or for water for irrigation.
